# EUROPEAN PATENT SPECIFICATION

(11) **EP 3 742 516 B1**
(45) Date of publication and mention of the grant of the patent: **06.09.2023**
(21) Application number: 19731863.7
(22) Date of filing: 28.03.2019
(51) Int. Cl.: H01M 50/244, H01M 50/296

(54) **ELECTRIC POWER UNIT AND WORKING MACHINE**
ELEKTRISCHES NETZTEIL UND ARBEITSMASCHINE
UNITÉ ÉLECTRIQUE ET MACHINE DE TRAVAIL

(43) Date of publication of application: 25.11.2020
(73) Proprietor: HONDA MOTOR CO., LTD, Minato-ku Tokyo 107-8556 (JP)
(72) Inventor: MATSUMOTO, Takuya, Wako-shi, Saitama 3510193 (JP); TAKEICHI, Masashi, Wako-shi, Saitama 3510193 (JP)
(74) Representative: Kiwit, Benedikt
(86) International application number: PCT/JP2019/013834
(87) International publication number: WO 2020/194728

(56) References cited:
- EP-A1- 3 331 056
- JP-A- H08 250 089
- JP-A- S63 207 049
- JP-A- 2014 147 353
- JP-U- H0 636 207
- JP-U- S59 161 264
- US-A1- 2015 249 235

## Description

### TECHNICAL FIELD

The present invention relates to an electric power unit having a battery mounting structure, and a working machine.

### BACKGROUND ART

Conventionally, a lawn mower having a detachable battery has been known (for example, refer to Patent Document 1). This electric lawn mower is configured so that a battery mounting part equipped with a rail part and connection terminal is provided on a top face of a battery mounting base provided to the lawn mower main body, and by engaging the battery to the rail part of this battery mounting part and sliding along the rail part, a connector of the battery is electrically connected to the electrical terminal, and a lock claw provided to the battery and a claw engaging part of the battery mounting part are engaged.

Patent Document 2 discloses an electric mower with a battery being received in a battery receiving recess. A battery side connector is provided in a front end of the battery, and a mower side connector is provided in a front end of the battery receiving recess and configured to be electrically connected to the battery side connector when the front end of the battery is pushed against the front end of the battery receiving recess. A section of guide rails provided on the bottom surface of the battery receiving recess is configured to guide ribs provided on the lower surface of the battery so as to laterally align the battery with respect to the battery receiving recess as the battery is displaced toward the front end of the battery recess.

Patent Document 3 discloses an electronic apparatus with a lock mechanism for locking a battery in a battery compartment.

Patent Document 1: Japanese Unexamined Patent Application, Publication No. JP 2014 147353 A
Patent Document 2: EP 3 331 056 A1
Patent Document 3: US 2015/249235 A1

### DISCLOSURE OF THE INVENTION

### Problems to be Solved by the Invention

However, with the above prior art, due to the connecting direction of the battery to the battery mounting part being limited to one direction along the rail part, it is necessary to perform design (arrangement of battery mounting part) of the working machine taking consideration of the connecting direction. For example, the handle for operation, a protective frame, etc. are provided to the working machine; however, in this case, the connection path of the battery the handle, frame, etc. must be designed so as to avoid, or the connection path of the battery must be designed so as to avoid the handle, frame, etc. For this reason, there has a problem in that the degrees of freedom in layout of constituent components including the battery are limited.

Therefore, the present invention has an object of providing for an electric power unit a battery mounting structure, which can improve the degrees of freedom in layout of constituent components including the battery, without restrictions in the mounting direction of the battery.

In addition, the present invention has an object of providing a working machine which can improve the degrees of freedom in layout of constituent components including an electric-power storage member, without restrictions in the mounting direction of the electric-power storage member.

### Means for Solving the Problems

These and other objects are to be accomplished by means of the independent claims 1 and 5. The dependent claims advantageously study further the central idea of the present invention.

A first aspect of the invention relates to an electric power unit having a battery mounting structure. The battery mounting structure according to the present invention includes: a placement member (for example, the battery tray 3 described later) provided at an upper part of an electrical component (for example, the motor 20, PDU 21 described later); a battery (for example, the battery 4 described later) which is provided to be attachable and detachable relative to the placement member and drives the electrical component; and a connection member (for example, the harness 23, connection terminal 24 described later) which extends from the electrical component to the battery and is capable of electrically connecting the electrical component and the battery.

Thereby, since the electrical component and battery are directly connectable by the connection member without going through the placement member, and it is unnecessary to provide a terminal on the placement member, it is possible to improve the degrees of freedom in layout of constituent components including the battery, without the battery mounting direction being restricted. In addition, upon mounting the battery to the placement member, since it is unnecessary to fear damage of the terminal, it is also possible to comfortably perform mounting of the battery. Furthermore, since it is possible to arrange the electrical component and battery closely via the placement member, it also becomes possible to shorten the connection member.

The battery has an engaged part (for example, the engaged part 43 described later), and the placement member has an engaging member (for example, the buckle 33 described later) which engages with the engaged part to fix the battery on the placement member.

Thereby, since it is possible to fix the battery on the placement member by engaging the engaging member provided to the placement member with the engaged part of the battery, the structure of the battery can be simplified, carrying of the battery becomes easy, and the cost of the battery can also be reduced.

The engaging member has a pressing part (for example, the lever part 332 described later) which can apply a load towards the placement member on the battery, in an engaged state with the battery, and an elastic member (for example, the elastic member 37 described later) is disposed between the placement member and the battery.

Thereby, by causing the elastic member to elastically deform by the load acting on the battery in an engaged stage between the battery and engaging member, since it is possible to tightly fix the battery to the placement member, it is possible to suppress the battery and placement member from relatively moving upon vibrations, etc. acting on the battery, and it is possible to suppress abrasion arising between the battery and placement member.

The engaging member may have a movable part (for example, the movable part 331 described later) which is mounted to the placement member, and the pressing part is provided continuously to the movable part, and the engaged part may be disposed on a top face (for example, the top face 4d described later) of the battery.

Thereby, by applying a load on the elastic member from the top face of the battery opposing the elastic member, compared to a configuration engaging the engaging member with a side face or the like of the battery, it is possible to simply configure the battery, and possible to easily and reliably fix the battery to the placement member.

The movable part may be swingably mounted to the placement member, and the placement member may have a resistance member which causes resistance during swinging of the movable part.

Thereby, it is possible to easily convey the placement member, etc., due to the engaging member being able to suppress unintended swinging such as during conveyance after the battery has been removed from the placement member, by way of the resistance member.

The placement member may have a retaining part (for example, the retaining part 32 described later) which retains the battery, and the retaining part may be provided to be capable of attaching and detaching to the placement member.

Thereby, since it is possible to replace only the retaining part when stress acts on the retaining part and damages or the like during mounting of the battery, while working, etc., the maintenance property improves.

A further aspect of the present invention relates to a working machine (for example, the working machine 100, 100A described later), which includes: a drive member (for example, the power unit main body 2, 6, power transmission mechanism section 102, excitation mechanism section 103, 105 described later) which is driven by electricity. The drive member includes an electric power unit in any one of the configurations described above.

Thereby, since it is possible to directly electrically connect the electrical component and electric-power storage member (which is the battery 4) by way of the connection member without going through the placement member, and it is unnecessary to provide a terminal on the placement member, it is possible to improve the degrees of freedom in layout of constituent components including the electric-power storage member, without the mounting direction of the electric-power storage member being restricted. In addition, upon mounting the electric-power storage member to the placement member, since it is unnecessary to fear damage of the terminal, it is also possible to comfortably perform mounting of the electric-power storage member. Furthermore, since it is possible to arrange the electrical component and electric-power storage member closely via the placement member, it also becomes possible to shorten the connection member.

In the working machine as described above, the electric-power storage member has an engaged part (for example, the engaged part 43 described later), and the placement member has an engaging member (for example, the buckle 33 described later) which engages with the engaged part to fix the electric-power storage member on the placement member.

Thereby, since it is possible to fix the electric-power storage member on the placement member by engaging the engaging member provided to the placement member with the engaged part of the electric-power storage member, the structure of the electric-power storage member can be simplified, carrying of the electric-power storage member becomes easy, and the cost of the electric-power storage member can also be reduced.

In the working machine as described above, the engaging member has a pressing part (for example, the lever part 332 described later) which can apply a load towards the placement member on the electric-power storage member, in an engaged state with the electric-power storage member, and an elastic member (for example, the elastic member 37 described later) is disposed between the placement member and the electric-power storage member.

Thereby, by causing the elastic member to elastically deform by the load acting on the electric-power storage member in an engaged stage between the electric-power storage member and engaging member, since it is possible to tightly fix the electric-power storage member to the placement member, it is possible to suppress the electric-power storage member and placement member from relatively moving upon vibrations, etc. acting on the electric-power storage member, and it is possible to suppress abrasion arising between the electric-power storage member and placement member.

Preferably, in the working machine as described above, the engaging member may have a movable part (for example, the movable part 331 described later) which is mounted to the placement member, and the pressing part is continuously provided to the movable part, and the engaged part may be disposed on a top face (for example, the top face 4d described later) of the electric-power storage member.

Thereby, by applying a load on the elastic member from the top face of the electric-power storage member opposing the elastic member, compared to a configuration engaging the engaging member with a side face or the like of the electric-power storage member, it is possible to simply configure the electric-power storage member, and possible to easily and reliably fix the electric-power storage member to the placement member.

Preferably, in the working machine as described above, the movable part may be swingably mounted to the placement member, and the placement member may have a resistance member (for example, the resistance member 35 described later) which causes resistance during swinging of the movable part.

Thereby, it is possible to easily convey the placement member, etc., due to the engaging member being able to suppress unintended swinging such as during conveyance after the electric-power storage member has been removed from the placement member, by way of the resistance member.

Preferably, in the working machine as described above, the placement member may have a retaining part (for example, the retaining part 32 described later) which retains the electric-power storage member, and the retaining part may be provided to be capable of attaching and detaching to the placement member.

Thereby, since it is possible to replace only the retaining part when stress acts on the retaining part and damages or the like during mounting of the battery, while working, etc., the maintenance property improves.

According to the present invention, it is possible to provide an electric power unit with a battery mounting structure which can improve the degrees of freedom in layout of constituent components including the battery, without restrictions in the mounting direction of the battery.

In addition, according to the present invention, it is possible to provide a working machine which can improve the degrees of freedom in layout of constituent components including an electric-power storage member, without restrictions in the mounting direction of the electric-power storage member.

### BRIEF DESCRIPTION OF THE DRAWINGS

FIG. 1 is a perspective view showing a configuration example of a working machine equipped with an electric power unit according to a first embodiment;
FIG. 2 is a front view of the electric power unit according to the first embodiment;
FIG. 3 is a back view of the electric power unit according to the first embodiment;
FIG. 4 is a right-side view of the electric power unit according to the first embodiment;
FIG. 5 is a left-side view of the electric power unit according to the first embodiment;
FIG. 6 is a plan view of the electric power unit according to the first embodiment;
FIG. 7 is an exploded perspective view of the electric power unit according to the first embodiment;
FIG. 8 is a perspective view showing the electric power unit according to the first embodiment from which a decorative cover of the battery and battery tray were removed;
FIG. 9 is a plan view showing the electric power unit shown in FIG. 8;
FIG. 10 is a perspective view showing a mounting site between an engagement member and tray main body to be enlarged;
FIG. 11 is a cross-sectional view along the line A-A in FIG. 10;
FIG. 12 is a front view showing an elastic member provided on a battery tray;
FIG. 13 is a plan view of a battery;
FIG. 14 is a perspective view looking at a right side of the battery from a back side;
FIG. 15 is a perspective view looking at a left side of the battery from a back side;
FIG. 16 is a perspective view showing a connection terminal;
FIG. 17 is an explanatory view illustrating a method of mounting the battery to the battery tray;
FIG. 18 is an explanatory view illustrating a method of mounting the battery to the battery tray;
FIG. 19 is an explanatory view illustrating a method of mounting the battery to the battery tray;
FIG. 20 is a perspective view showing a cap in a cross section;
FIG. 21 is a perspective view of the electric power unit according to the first embodiment showing an aspect of protecting the connection terminal by a cap;
FIG. 22 is a perspective view showing main parts of the electric power unit according to the first embodiment;
FIG. 23 is a right-side view showing main parts of the electric power unit according to the first embodiment showing a state mounting the cap to a mounting part;
FIG. 24 is a perspective view showing main parts of the electric power unit according to the first embodiment showing a state removing the connection terminal from the battery;
FIG. 25 is a right-side view showing main parts of the electric power unit according to the first embodiment showing a state removing the connection terminal from the battery;
FIG. 26 is a perspective view showing a configuration example of a working machine equipped with an electric power unit according to a second embodiment;
FIG. 27 is a perspective view of the electric power unit according to the second embodiment showing a state in which the connection terminal is connected to the battery;
FIG. 28 is a left-side view of the electric power unit shown in FIG. 27;
FIG. 29 is an exploded perspective view of main parts of the electric power unit according to the second embodiment;
FIG. 30 is a perspective view of the electric power unit according to the second embodiment showing a state in which the connection terminal was removed from the battery; and
FIG. 31 is a left-side view of the electric power unit shown in FIG. 30.

### PREFERRED MODE FOR CARRYING OUT THE INVENTION

Herein, a specific embodiment of a battery mounting structure according to an embodiment of the present invention will be explained. The battery mounting structure of the electric power unit according to an embodiment of the present invention is widely applicable to various machines and apparatuses to which a battery driving electrical component is provided to be capable of attaching and detaching relative to a placement member provided at the top of the electrical component. In the present invention, the specific machines and apparatuses are in no way limited; however, a working machine equipped with an electric power unit can be exemplified, for example. As the working machine, civil engineering machinery or agricultural machinery, such as a ground leveling machine, lawn mower, farm tractor and snow plow can be exemplified. Therefore, taking a working machine equipped with an electric power unit as an example, the battery mounting structure in this electric power unit will be explained in detail hereinafter.

### (First Embodiment)

### <Configuration of Working Machine>

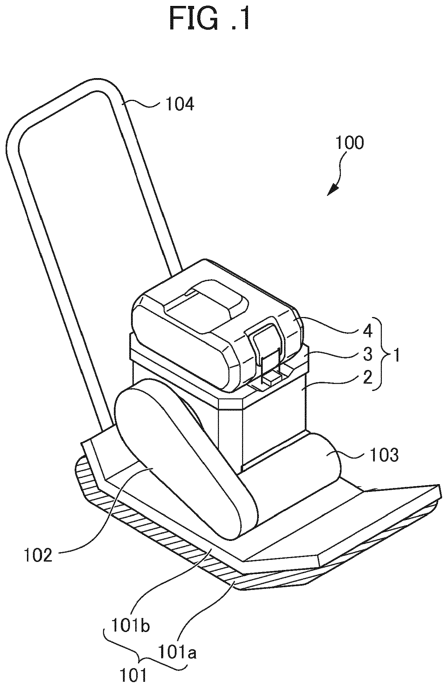

First, a first embodiment of an electric power unit will be explained in detail while referencing the drawings. FIG. 1 is a perspective view showing a configuration example of a working machine equipped with the electric power unit according to the first embodiment. In the present embodiment, a plate compactor which is a form of a ground-leveling device is exemplified as the working machine 100. The working machine 100 is a working machine equipped with an electric power unit 1. In detail, the working machine 100 includes the electric power unit 1, a working mechanical section 101, a power transmission mechanism section 102, an excitation mechanism section 103, and a handle 104.

The electric power unit 1 has a power unit main body 2 having a motor (not illustrated in FIG. 1), a battery tray 3 provided at the top of this power unit main body 2, and a battery 4 which installed on this battery tray 3 and is a driving source that drives the power unit main body 2. The configuration of this electric power unit 1 will be explained in further detail at a later stage.

The working mechanism section 101 is a part performing rolling compaction of the ground mainly, and is one embodiment of a contact patch member. The working mechanism section 101 has a rolling plate 101a which contacts the ground, and a base 101b arranged on the top face of this rolling plate 101a. The electric power unit 1 is mounted on the top face of the base 101b. The power transmission mechanism section 102 transmits the rotative power of the motor possessed by the power unit main body 2, to the excitation mechanism section 103 via power transmission members such as a belt or chain (not illustrated).

The excitation mechanism section 103 has an eccentric load (not illustrated) which is coupled with the power transmission mechanism section 102 to be able to transmit power. The excitation mechanism section 103 causes the rolling plate 101a of the working mechanism section 101 to shake vertically to generate a compacting force on the ground, by causing the eccentric load to rotate by the rotative power of the motor transmitted by the power transmission mechanism section 102, and generates compaction force on the ground.

It should be noted that this power unit main body 2, power transmission mechanism section 102 and excitation mechanism section 103 are embodiments of a driving member for driving the contact patch member by way of electricity. The handle 104 is configured in a bar shape which can be gripped by an operator in a standing position. The operator can thereby perform compacting work on the ground, while pushing the working machine 100 by the handle 104.

### <Configuration of Electric Power Unit>

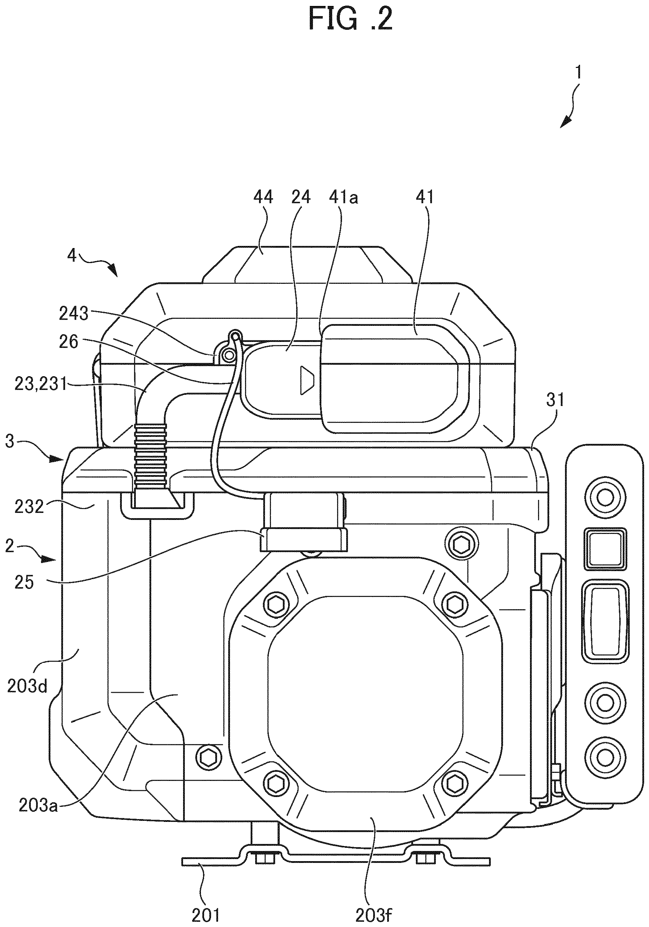

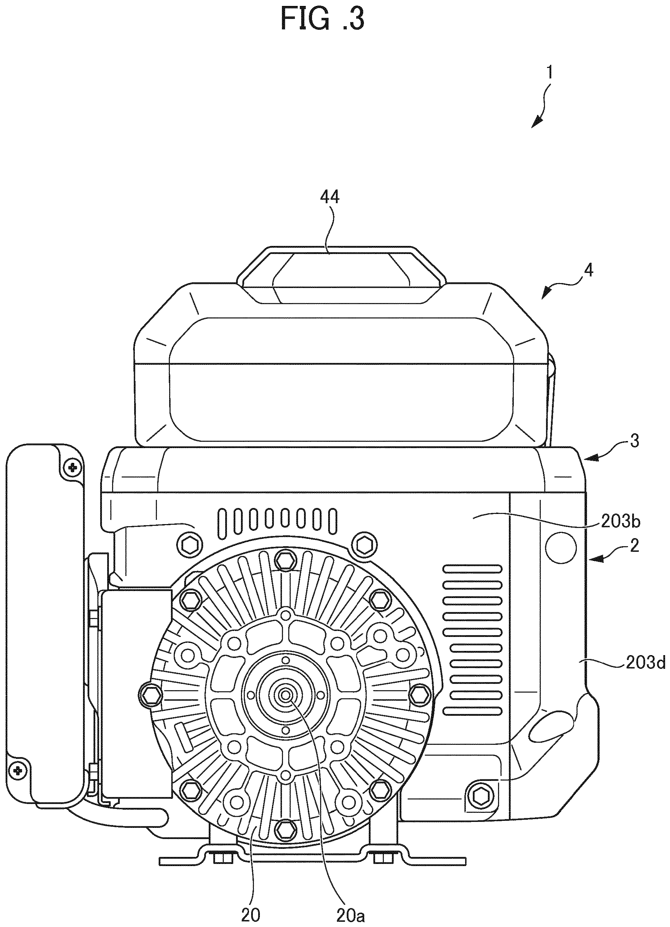

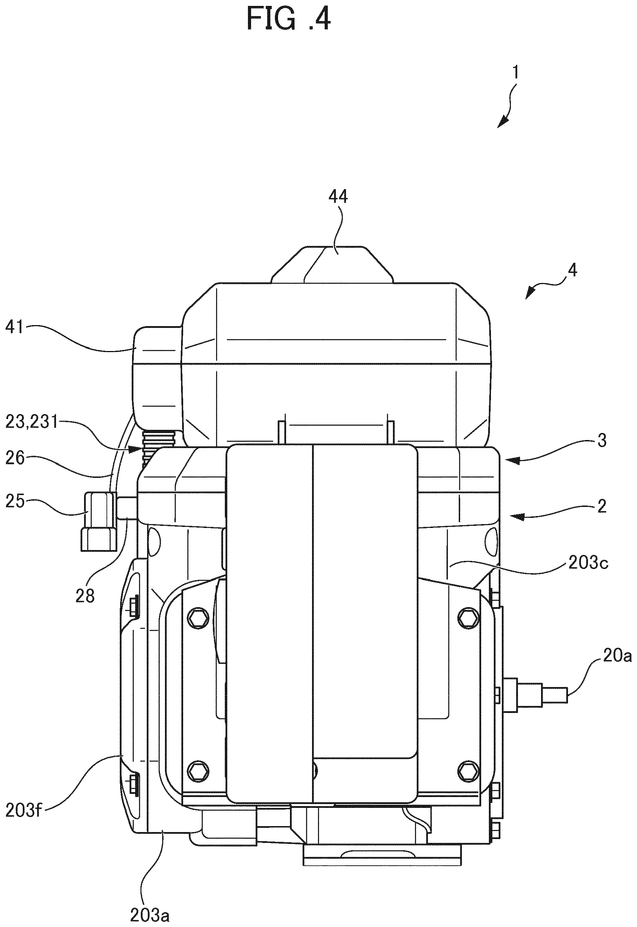

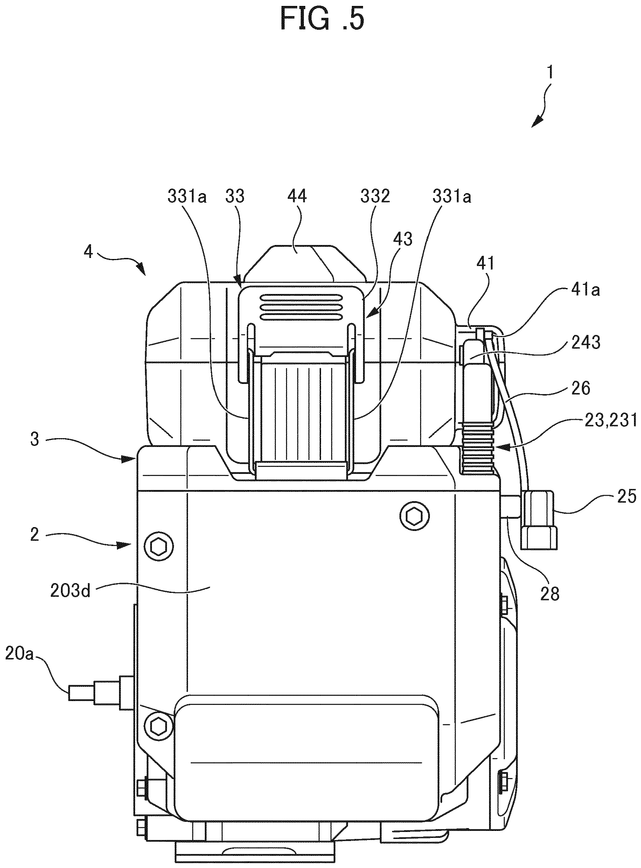

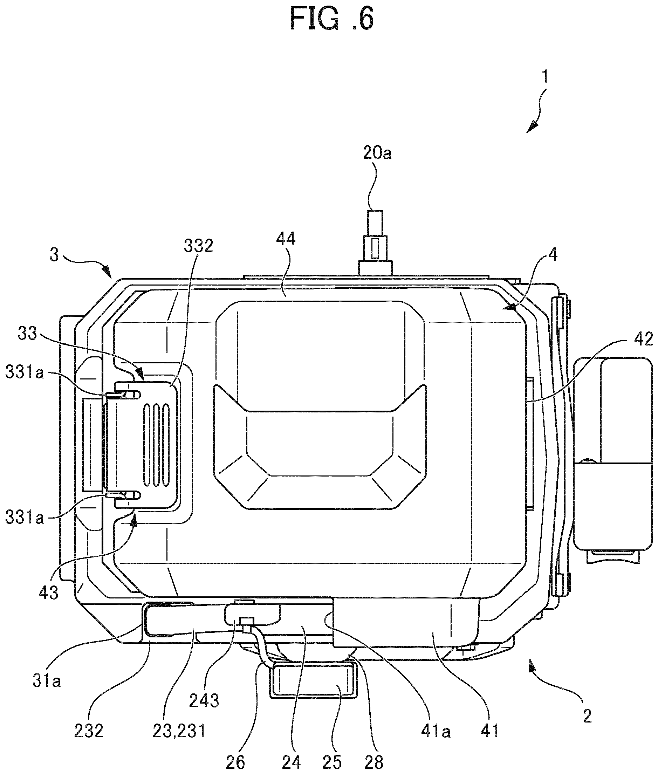

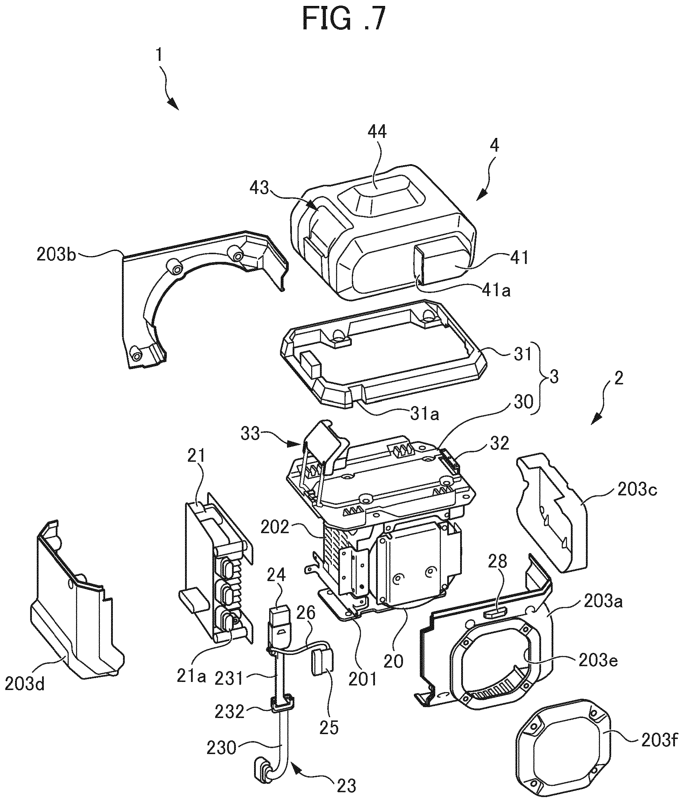

Next, the configuration of the electric power unit 1 will be explained. FIG. 2 is a front view of the electric power unit according to the first embodiment. FIG. 3 is a back view of the electric power unit according to the first embodiment. FIG. 4 is a right-side view of the electric power unit according to the first embodiment. FIG. 5 is a left-side view of the electric power unit according to the first embodiment. FIG. 6 is a plan view of the electric power unit according to the first embodiment. FIG. 7 is an exploded perspective view of the electric power unit according to the first embodiment. It should be noted that, in FIG. 7, fastening members such as screws and bolts for mounting each member are omitted from illustration.

### (Overall Configuration of Electric Power Unit)

The electric power unit 1 has the power unit main body 2, battery tray 3 and battery 4. This power unit main body 2 has a motor 20, and PDU (Power Delivery Unit) 21. This motor 20 and PDU 21 are embodiments of an electrical component. The motor 20 is mounted on a base plate 201 for mounting the power unit main body 2 on the base 101b of the working mechanism section 101, directing the output shaft (rotary shaft) 20a to the back side of the electric power unit 1.

The PDU 21 is for power distribution controlling the electric power from the battery 4 to the motor 20 in the power unit main body 2 and other electrical components. The PDU 21 is mounted to a support frame 202 provided from the base plate 201 over to the side and top faces of the motor 20. The PDU 21 has a plurality of connection parts, and a harness 23 having connection terminal 24 for electrically connecting with the battery 4 and introducing the electric power from the battery 4 to the PDU 21 is connected to one connection part 21a thereamong. It should be noted that a harness for supplying electric power introduced via the connection terminal 24 and harness 23 to the motor 20, or a harness for electrically connecting with another electrical component such as sensors is connected to the PDU 21; however, these harnesses are omitted from illustration.

The circumference of the motor 20 is covered by a front motor cover 203a, a rear motor cover 203b, a right-side motor cover 203c and a left-side motor cover 203d. These motor covers 203a to 203d constitute a housing which covers the side faces of the power unit main body 2. The PDU 21 is accommodated between the left-side motor cover 203d and support frame 202. In addition, the harness 23 connected to the PDU 21 is also accommodated inside of the front motor cover 203a and left-side motor cover 203d. The front motor cover 203a has a gas uptake port 203e for a cooling fan arranged at the front side of the motor 20. The gas uptake port 203e is covered by a fan cover 203f.

### (Battery Tray)

The battery tray 3 is for placing the battery 4 and mounting on the power unit main body 2, and is an embodiment of a placement member which places and fixes the battery 4. The battery tray 3 of the present embodiment has a rectangular tray main body 30 mounted on the top face of the support frame 202, and a rectangular frame-like decorative cover 31 mounted so as to surround the outer circumference of the tray main body 30.

A part of the outer circumference on the front side of the decorative cover 31 constitutes a harness drawing part 31a which communicates with the inside of the front motor cover 203a and left-side motor cover 203d, by being formed so as to partially recess. The harness drawing part 31a is arranged at a position biased to the left side in a front view relative to the PDU 21, at the front side of the power unit main body 2. The harness 23 accommodated inside of the front motor cover 203a and left-side motor cover 203d is drawn to the outside from this harness drawing part 31a to above the power unit main body 2.

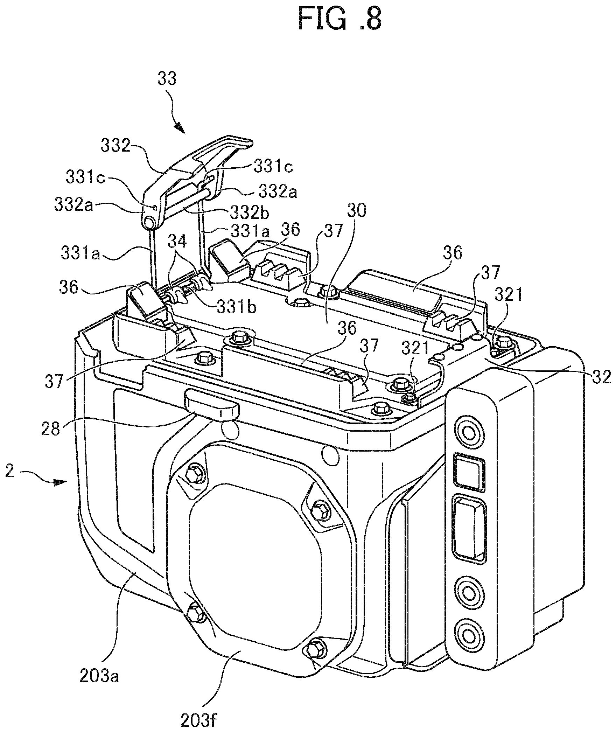

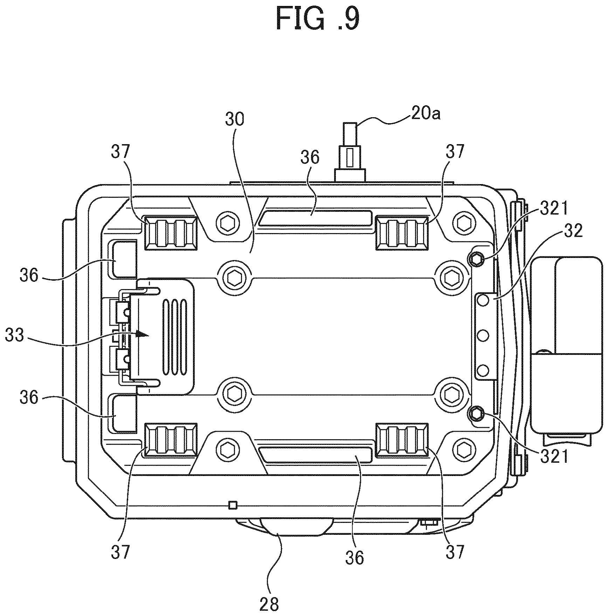

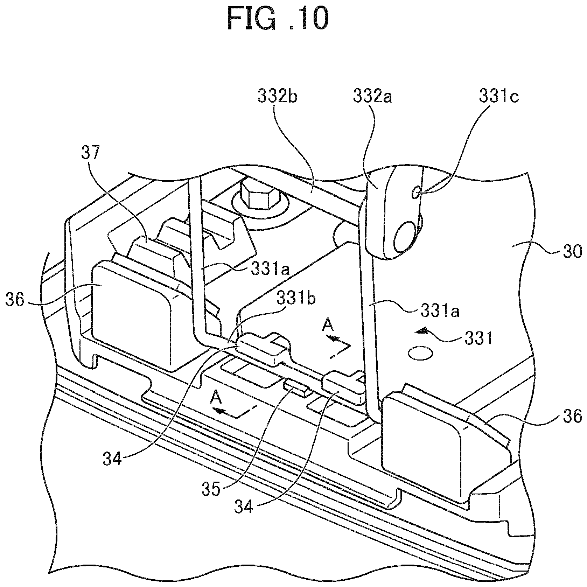

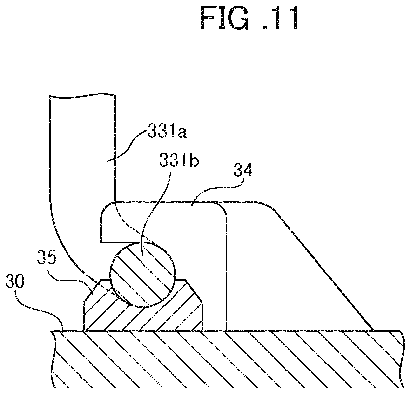

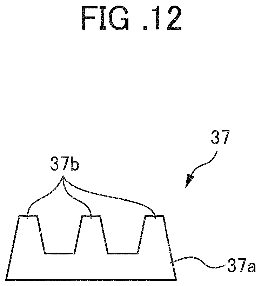

The configuration of the battery tray 3 will be explained in further detail by referencing FIGS. 8 to 12. FIG. 8 is a perspective view showing the electric power unit from which the battery and the decorative cover of battery tray have been removed. FIG. 9 is a plan view showing the electric power unit shown in FIG. 8. FIG. 10 is a perspective view showing a mounting site between an engagement member and tray main body to be enlarged. FIG. 11 is a cross-sectional view along the line A-A in FIG. 10. FIG. 12 is a front view showing an elastic member provided on the battery tray.

On the top face of the tray main body 30 of the battery tray 3, along with a retaining part 32 being provided at one end in the left/right direction (right end when viewing the power unit main body 2 from the front), a buckle 33 is provide to the other end (left end when viewing the power unit main body 2 from the front). This buckle 33 is an embodiment of an engaging member of the present invention.

The retaining part 32 is for locking one end of the battery 4 to retain to the battery tray 3, and is provided so as to stand up in a reverse L shape towards the center of the tray main body 30. The retaining part 32 is detachably mounted to the tray main body 30 by a fastening members 321 such as screws and bolts illustrated in FIG. 8.

The buckle 33 is for engaging with the battery 4 and fixing to the battery tray 3 along with the retaining part 32, and has a movable part 331 provided swingably relative to the tray main body 30, and a lever part 332 provided to be rotatable continuously to a leading end of this movable part 331.

The movable part 331 has a pair of parallel wire sections 331a, 331a extending linearly, and a shaft section 331b connecting lower ends of the wire sections 331a, 331a, and is formed by bending a metal wire of circular cross section. The leading ends of the wire sections 331a, 331a constitute mounting shafts 331c, 331c to the lever part 332, by bending towards the retaining part 32, and the leading end thereof further bending to both sides, in a state standing on the tray main body 30. In addition, the shaft section 331b of the movable part 331 is locked by a pair of hook claws 34, 34 projecting on the top face of the tray main body 30. The movable part 331 is thereby swingably mounted in the left/right direction of the power unit main body 2 (direction approaching or distancing relative to the retaining part 32).

The lever part 332 is an embodiment of pressing part which presses the battery 4. The lever part 332 has a pair of support legs 332a, 332a at the lower end. To these support legs 332a, 332a, the mounting shafts 331c, 331c of the movable part 331 are mounted so as to penetrate from inside to outside of the support legs 332a, 332a. The lever part 332 is thereby mounted rotatably around the mounting shafts 331c, 331c at the leading end of the movable part 331. In addition, the lever part 332 has one rod-shaped locking shaft 332b spanning the pair of support legs 332a, 332a, at a position more to the lower end side than the mounting site of the mounting shafts 331c, 331c, and closer to a center side (closer to tray main body 30) than the wire sections 331a, 331a.

As shown in FIG. 10 and FIG. 11, a resistance member 35 which generates resistance by way of friction during swinging of the movable part 331 around the shaft section 331b is provided between the pair of hook claws 34, 34 provided to the tray main body 30. Generally, the resistance member 35 is formed by a member having elasticity or flexibility such as rubber or resin, and is provided so as to interpose the shaft section 331b of the movable part 331 relative to the battery tray 3 between the hood claws 34, 34. By way of this resistance member 35, it is possible to easily convey the working machine 100, due to the buckle 33 being able to suppress unintended swinging such as during conveyance of the working machine 300 after the battery 4 has been removed from the battery tray 3. In addition, by appropriately changing the resistance value (shape, material) of the resistance member 35, it is possible to provisionally fix the buckle 33 at a position of an arbitrary swing angle, without making so that the buckle 33 unintentionally collapses due to its own weight. For this reason, it is possible to improve the workability upon mounting the battery 4 to the battery tray 3.

As shown in FIG. 8 and FIG. 9, an appropriate number of guide support parts 36 for guiding and supporting the battery 4 are provided to project at the outer circumference on the tray main body 30. The guide support parts 36 are respectively arranged at each long side (front side and back side) on the top face of the tray main body 30, and respectively arranged so as to sandwich the buckle 33 on the short side (left side) on which the buckle 33 is arranged on the top face of the tray main body 30. The surface of each guide support part 36 is made as a sloped face which slopes towards the central side of the tray main body 30. A buffer material consisting of rubber, resin or the like is provided on the surface of the sloped face. For this reason, upon the battery 4 being placed on the battery tray 3, the battery 4 is supported from the lower face side and guided to a suitable position at the center of the tray main body 30 naturally by these guide support parts 36.

In the tray main body 30, a plurality of elastic members 37 consisting of an elastic material such as rubber or resin, for example, is provided somewhat more to the center than the guide support parts 36. The elastic member 37, upon the battery 4 being placed on the battery tray 3, elastically supports the battery 4 by elastically deforming to accept the load of the battery 4. The elastic member 37 of the present embodiment has a base 37a mounted on the tray main body 30, and a plurality of protrusions 37b which are provided to project on the top of the base 37a. Between adjacent protrusions 37b, 37b are separated by a width substantially the same as the protrusion 37b. Each protrusion 37b is formed in a tapered shape as moving upwards, and comes to be able to easily bend upon receiving the load of the battery 4. In addition, since the side of the base 37a of the elastic member 37 is wide, it comes to be possible to cause an appropriate elastic repulsive force to act on the battery 4.

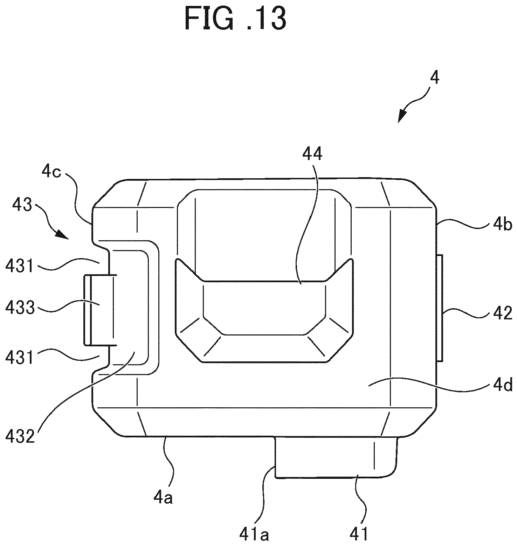

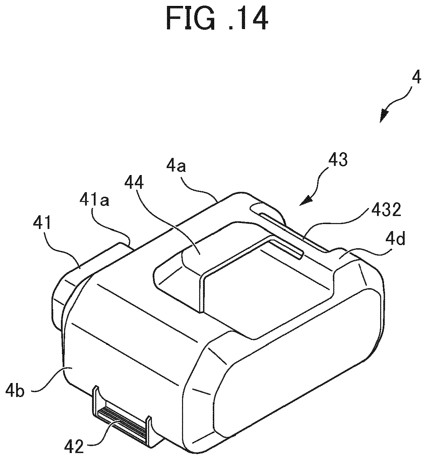

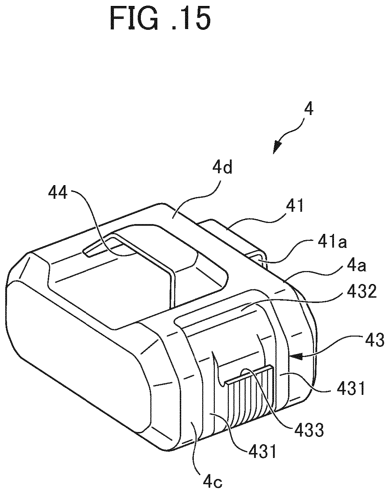

Next, the configuration of the battery 4 will be further explained using FIGS. 13 to 15. FIG. 13 is a plan view of the battery according to the embodiment. FIG. 14 is a perspective view looking at the right side of the battery according to the embodiment from the back side. FIG. 15 is a perspective view looking at the left side of the battery according to the embodiment from the back side. The battery 4 of the present embodiment has a substantially rectangular parallelepiped shape, and is detachably provided to the battery tray 3 on the top of the power unit main body 2. Next, the configuration of the battery 4 will be further explained using FIGS. 13 to 15. This battery is an embodiment of the electric-power storage member.

A connection part 41 for accommodating the connection terminal 24 provided to the leading end of the harness 23 and connecting with a connector part (not illustrated) in the battery 4 is provided to the battery 4 so as to project forwards. The connection part 41 is arranged at the front face 4a of the battery 4, and has an opening part 41a into which the connection terminal 24 is inserted, in a direction in which the harness 23 and connection terminal 24 are arranged (left direction in FIG. 2), in a state in which the battery 4 is mounted on the battery tray 3.

As shown in FIG. 14, a locking groove 42 is provided to the lower part of the right face 4b of the battery 4. The locking groove 42 causes the battery 4 to lock to the retaining part 32, by accepting the leading end of the retaining part 32 on the tray main body 30. In addition, as shown in FIG. 15, an engaged part 43 which engages with the buckle 33 on the tray main body 30 is provided from the left face 4c of the battery 4 directly opposing with the locking groove 42 towards the top face 4d. The engaged part 43 has a pair of first storing recesses 431, 431 which can store the pair of wire sections 331a, 331a of the movable part 331 of the buckle 33, and a second storing recess 432 which is continuous with the upper end of the first storing recesses 431, 431 and can store the lever part 332 of the buckle 33. Between the pair of first storing recesses 431, 431, a shaft locking part 433 which can lock the locking shaft 332b of the buckle 33 is provided. The first storing recesses 431, 431 are provided to the left face 4c of the battery 4, and the second storing recess 432 is provide from the left face 4c of the battery 4 to the top face 4d. Furthermore, a handle part 44 upon transporting the battery 4 is provided to the top face 4d of the battery 4.

### (Harness and Connection Terminal)

In the present embodiment, as shown in FIG. 7, the harness 23 electrically connecting the power unit main body 2 and battery 4 has a first portion 230 which is stored inside of the power unit main body 2 and electrically connected with a connection part 21a of the PDU 21, and a second portion 231 which is drawn from the power unit main body 2 to outside and extends to the battery 4. The harness 23 is configured to be easily bendable in any direction. In the middle of the harness 23, one sealing part 232 made of resin is provided so as to surround in a wall shape the outer circumference of the harness 23. As shown in FIG. 2, the sealing part 232 is mounted so as to fit in a harness drawing part 31 provided in the decorative cover 31 of the battery tray 3. The harness drawing part 31a is thereby sealed by the sealing part 232, and contamination such as dust, dirt and rain is prevented from infiltrating to inside of the power unit main body 2 along the outer surface of the second portion 231 of the harness 23.

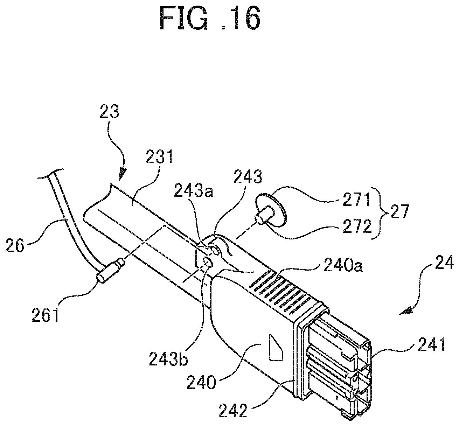

The connection terminal 24 is connected to the leading end of the second portion 231 of the harness 23. The configuration of this connection terminal 24 will be explained using FIG. 16. FIG. 16 is a perspective view showing a connection terminal according to the embodiment. The connection terminal 24 has a connection terminal main body 240 made of resin, and a terminal part 241 which projects from the leading end of the connection terminal main body 240. The connection terminal main body 240 is formed to be sufficiently wider than the harness 23, so as to be easily gripped by the operator. The terminal part 241 is a site carrying out electrical connection to the connector part (not illustrated) in the battery 4 through the opening part 41a of the battery 4. FIG. 2 and FIGS. 4 to 6 show a state in which the connection terminal 24 is electrically connected through the opening part 41a of the battery 4 (useable state of electric power unit 1). In this state, the harness 23 causes the second portion 231 extending upwards from the harness drawing part 31a of the battery tray 3 in a substantially right-angle direction towards the opening part 41a of the battery 4, and inserts the connection terminal 24 at the leading end to inside of the opening part 41 to connect to the connector part (not illustrated) on the interior. This harness 23 and connection terminal 24 are embodiments of connection members which electrically connect the electrical component and electric-power storage member.

In this way, the electric power unit 1 shown in the present embodiment is configured so as to electrically connect between the battery 4, which is the driving source of the power unit main body 2, and the power unit main body 2 via the harness 23 extending from the power unit main body 2 to the battery 4 and the connection terminal 24. The electric power unit 1 thereby becomes able to electrically connect the power unit main body 2 and battery 4 directly without going through the battery tray 3. Since it is unnecessary to provide a terminal for electrical connection with the battery 4 on the battery tray 3, it is possible to improve the layout degrees of freedom in the constituent components including the battery 4 (for example, handle 104, etc. of the working machine 100), without the mounting direction of the battery 4 being restricted. In addition, upon mounting the battery 4 to the battery tray 3, since it is unnecessary to worry about damage of the terminal, it is also possible to perform mounting of the battery 4 comfortably. Furthermore, since it is possible to arrange the power unit main body 2 and battery 4 to be near via the battery tray 3, shortening of the harness 23 is also possible.

### (Battery Mounting Method)

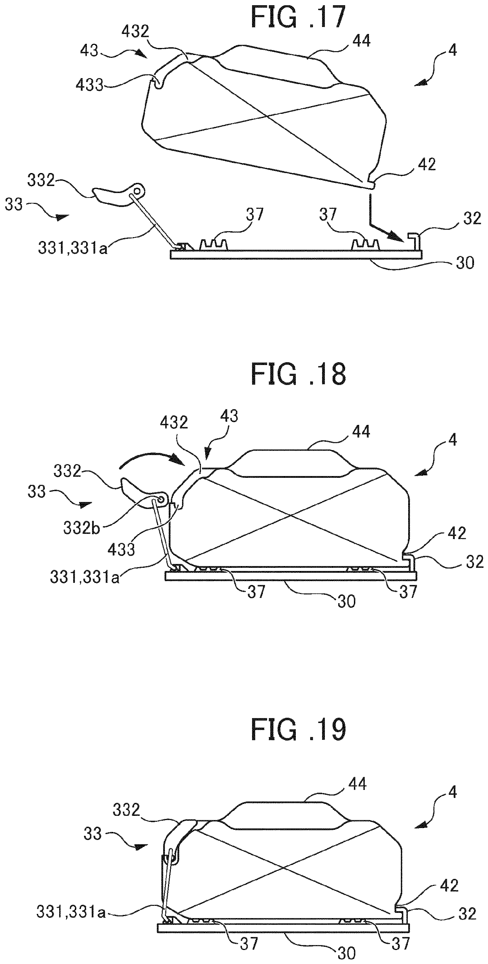

Herein, the method of mounting the battery 4 to the battery tray 3 in the present embodiment will be explained using FIGS. 17 to 19. FIGS. 17 to 19 are explanatory drawings illustrating a method of installing the battery to the battery tray.
(1) Holding the handle part 44 of the battery 4 and orienting a side having the locking groove 42 to the side of the retaining part 32, the battery 4 is conveyed over the tray main body 30 in a posture such that a side of the locking groove 32 is somewhat sloped downwards, and the locking groove 32 of the battery 4 is locked to the retaining part 32. At this time, the buckle 33 is arranged in a state stopping at a position of any swing angle that does not hinder carrying in the battery 4.
(2) After locking the locking groove 42 of the battery 4 to the retaining part 32, the battery 4 is placed on the tray main body 30. The battery 4 is naturally guided to a predetermined placement location in the central part of the tray main body 30 by the plurality of guide support parts 36. At this time, the battery 4 is tightly fixed to the tray main body 30, by the elastic member 37 elastically deforming appropriately by receiving the load of the battery 4. Subsequently, the locking shaft 332b of the buckle 33 is hooked to the shaft locking part 433 of the battery 4, and the lever part 332 of the buckle 33 is rotated to the side of the battery 4 and accommodated inside the engaged part 43 (FIG. 18) .
(3) When accommodating the lever part 332 of the buckle 33 within the engaged part 43 of the battery 4, the locking shaft 332b of the buckle 33 presses the shaft locking part 443 of the battery 4 downwards by the elasticity of the wire sections 331a, 331a of the moveable part 331. The battery 4 is thereby fixed to the battery tray 3 (FIG. 19). At this time, since the elastic repulsive force of the elastically deformed elastic member 37 acts on the battery 4, it is possible to fix the battery 4 without shuttering. For this reason, the battery 4 and battery tray 3 are suppressed from moving relatively upon vibration or the like acting on the battery 4, and abrasion is suppressed from arising between the battery 4 and battery tray 3.

After the battery 4 is fixed to the battery tray 3 in the above way, the power unit main body 2 becomes drivable by the connection terminal 24 being connected to the battery 4. In other words, the battery 4 and power unit main body 2 are directly electrically connected by the harness 23 having the connection terminal 24.

### (Cap)

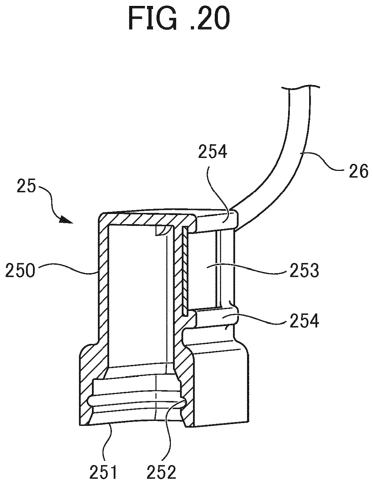

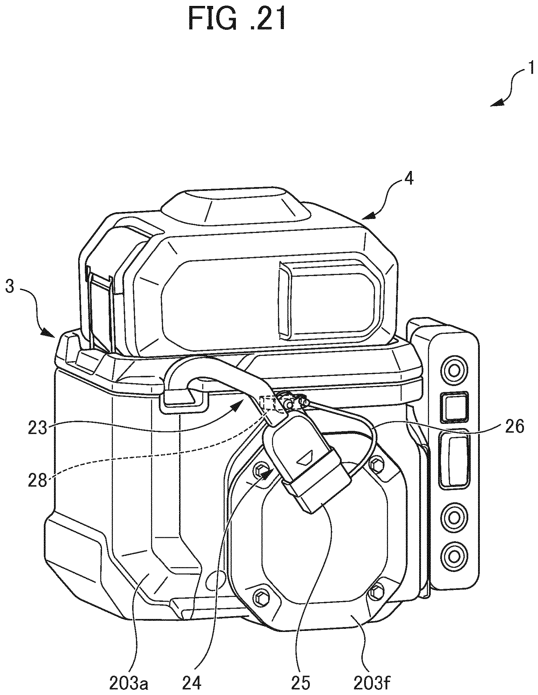

As shown in FIG. 7, the connection terminal 24 has a cap 25 which can protect the terminal part 241 upon removing from the battery 4. FIG. 20 is a perspective view showing the cap according to the embodiment in a cross section. FIG. 21 is a perspective view of the electric power unit showing an aspect of protecting the connection terminal by the cap. The cap 25 is formed in a bottomed container shape which can be mounted so as to be put on and cover the terminal part 241 of the connection terminal 24, from a material having elasticity and flexibility such as rubber or resin, for example. FIG. 20 is a perspective view showing the cap according to the embodiment in a cross section. This cap 25 is an embodiment of a protective member of the connection terminal 24.

The cap 25 is formed in a bottomed container shape having a cap main body 250, and an insertion opening 251 which is arranged in one surface of the cap main body 250 and opens in a rectangular shape into which the terminal part 241 of the connection terminal 24 can be inserted. While removing the connection terminal 24 from the battery 4, as shown in FIG. 21, by putting the cap 25 on the terminal part 241 of the connection terminal 24, it is possible to achieve protection of the connection terminal 24, and specifically, prevention of contamination by dust, dirt and water or damage.

A recess groove 252 spanning the entire circumference is provided to the inner circumference of the insertion opening 251 of the cap 25. The recess groove 252, upon the cap 25 being mounted to the terminal part 241 of the connection terminal 24, is configured so as to elastically engage to a projecting ridge part 242 (refer to FIG. 16) provided over a part or the entirety of the outer circumferential surface of the connection terminal main body 240. The cap 25 is thereby configured so as to be retained to the connection terminal 24 and not to easily come off, upon being mounted to the connection terminal 24.

A rectangular metal plate 253, which can be attracted by a magnet, is provided to one side face of the cap main body 250, as shown in FIG. 20. The metal plate 253 is locked by locking edges 254, 254 provided to side faces of the cap main body 250, and is mounted to the cap main body 250 so as to expose a majority thereof to the outside. However, the mounting structure of the metal plate 253 is not limited thereto, and may be adhered to the cap main body 250 by adhesive, or may be fixed to the cap main body 250 using a fastening member such as screws. In addition, the metal plate 253 may be integrally buried inside of the cap main body 250.

### (Cable)

The cap 25 has a cable 26 which is coupled with the connection terminal 24. This cable 26 is an embodiment of a coupling member. The cable 26, for example, is formed in a string shape having flexibility by the same material as the material constituting the cap 25 or another appropriate material, for example, and couples between the cap main body 250 and a coupling base 243 provided to the connection terminal 24. The cap 25 is thereby made in a state always coupled to the connection terminal 24 by the cable 26. For this reason, upon removing the connection terminal 24 from the battery 4, it is possible to easily pull in the cap 25 by hand using the cable 26. It is thereby possible to improve the workability upon mounting the cap 25 to the connection terminal 24.

Herein, the coupling base 243 of the connection terminal 24 will be further explained. As shown in FIG. 16, the coupling base 243 is provided to span the connection terminal 24 and the second portion 231 of the harness 23. In detail, the coupling base 243 continues to one side face 240a serving as a grip part of the connection terminal main body 240, and extends from this side face 240a to the second portion 231 in the vicinity of the connection site with the connection terminal 24. The side face 240a of this connection terminal main body 240 is a side face arranged so as to face upwards, in a state in which the connection terminal 24 is connected to the battery 4, as shown in FIG. 2.

The coupling base 243 has a shape overhanging laterally from a surface of the second portion 231 in the vicinity of the connecting site with the connection terminal 24 until the same position as the one side face 240a of the connection terminal 24. By this coupling base 243 being provided spanning the connection terminal 24 and the harness 23, the connection site between the connection terminal 24 and harness 23 is reinforced, and it is possible to lower the influence imparted on the operability (ease of handling) of the connection terminal 24. In addition, as shown in FIG. 2, since the coupling base 243 is arranged on an upper side in a state in which the connection terminal 24 is connected to the battery 4, upon connecting the connection terminal 24 to the battery 4, by marking that this coupling base 243 is arranged on the upper side, it is possible to perform the insertion operation of the connection terminal 24 without fail. Furthermore, the coupling base 243 of the present embodiment is provided continuously to one side face 240a serving as a grip part of the connection terminal 24; therefore, while maintaining the effect of reinforcing the connection site between the connection terminal 24 and harness 23, it is possible to curb to a minimum the influence imparted by the coupling base 243 on the operability (ease of handling) of the connection terminal 24.

The coupling base 243 has a cable mounting hole 243a for linking the cable 26. The cable mounting hole 243a is formed to penetrate a site at which a part of the coupling base 243 projects to a side. The cable 26 has a connecting axis 261 of a short cylindrical shape at the opposite end to the coupling end with the cap 25, and this connecting axis 261 is mounted to the cable mounting hole 243a from a front side by a means such as press fitting, heat staking, bonding and screwing. In other words, from the viewpoint of the cap 25 being coupled to the connection terminal 24 via the cable 26, the coupling base 243 shows an embodiment of a coupling part of the cable 26 (coupling member) in the connection terminal 24.

Other than the cable 26, a pin 27 made of metal which can be attracted by a magnet is mounted to the coupling base 243. In the pin 27 of the present embodiment, a mounting protrusion 272 projects from a face of a disk-like pin main body 271. The mounting protrusion 272 is mounted to the pin mounting hole 243b formed to penetrate the coupling base 243 from a back side by a means such as press fitting, bonding and screwing.

### (Mounting Part)

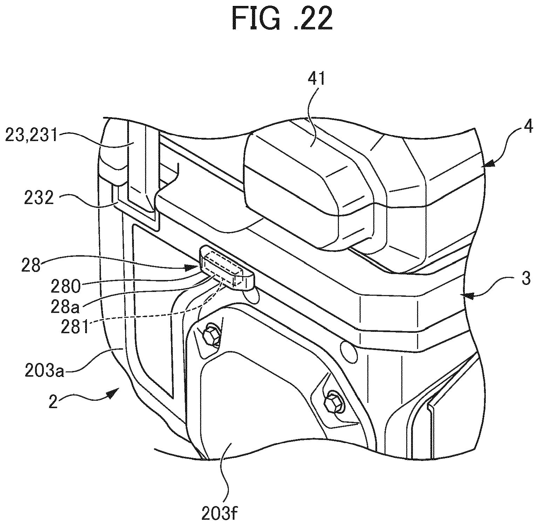

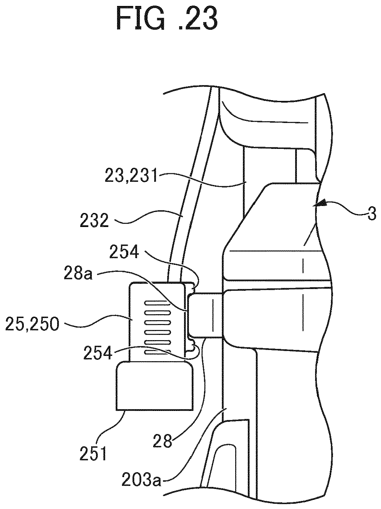

The cap 25 of the present embodiment is configured to be detachable to a mounting part 28 of the power unit main body 2. This mounting part 28 will be further explained using FIGS. 22 and 23. FIG. 22 is a perspective view showing main parts of the electric power unit. FIG. 23 is a right-side view showing main parts of the electric power unit showing a state mounting the cap to the mounting part. The mounting part 28 of the present embodiment is provided at substantially the central part on the upper end of the front motor cover 203a of the power unit main body 2. The mounting part 28 is configured by a magnet 281 being housed inside of the cover member 280 made of rubber or resin provided to project by a predetermined projecting amount from the outer surface of the front motor cover 203a. A leading end face 28a of the mounting part 28 becomes a flat surface of rectangular shape. The surface area of this leading end face 28a is substantially the same as the surface area of the metal plate 253 (surface area of portion of the cap 25 exposed to outside) provided to the cap 25. In addition, the leading end face 28a of the mounting part 28 is equally provided in the area between the locking edges 254, 254; therefore, it is possible to provide the leading end face 28a so as to abut the inner face of each locking edge 254, 254, and possible to prevent falling off of the cap 25 much more.

The cap 25 is magnetically attracted by abutting a surface having the metal plate 253 to the mounting part 28 to be mounted to the mounting part 28. As shown in FIG. 2 and FIG. 23, while connecting the connection terminal 24 to the battery 4, it is thereby possible to mount the cap 25 to the mounting part 28 of the power unit main body 2, and prevent loss of the cap 25. Furthermore, it is possible to prevent the cap 25 from being shaken by vibrations, etc. of the working machine 100 to which the electric power unit 1 is equipped, and becoming a hindrance to the operator. For this reason, the electric power unit 1 of the present embodiment and the working machine 100 equipped with this are able to improve workability at the location of the cap 25 in the connected state of the connection terminal 24.

The mounting part 28 of the present embodiment attracts the cap 25 by way of the magnet 281, and thus can allow the cap 25 to be easily and quickly attached and detached. The cap 25 mounted to the mounting part 28 can be easily removed from the mounting part 28, by separating against the attractive force of the magnet 281. In addition, the cap 25 of the present embodiment, due to being coupled to the connection terminal 24 by the cable 26, can prevent loss of the cap 25 also in the case of the cap 25 mistakenly falling off from the mounting part 28.

It should be noted that, as shown in FIG. 2 and FIG. 23, the cap 25 is configured to be mountable to the mounting part 28 so that the insertion opening 251 is oriented downwards in the direction of gravity. In other words, as shown in FIG. 2, in a state in which the connection terminal 24 s connected to the battery 4, the cable 26 is set to a sufficient length required to make the cap 25 face downwards and mountable to the mounting part 28. By the cap 25 being mounted to the mounting part 28 downwards in this way, upon mounting the cap 25 to the connection terminal 24 without dust, dirt, water, etc. gathering inside of the cap 25, there is no concern of contaminating the terminal part 241.

### (Regarding State of Cap Mounted to Connection Terminal)

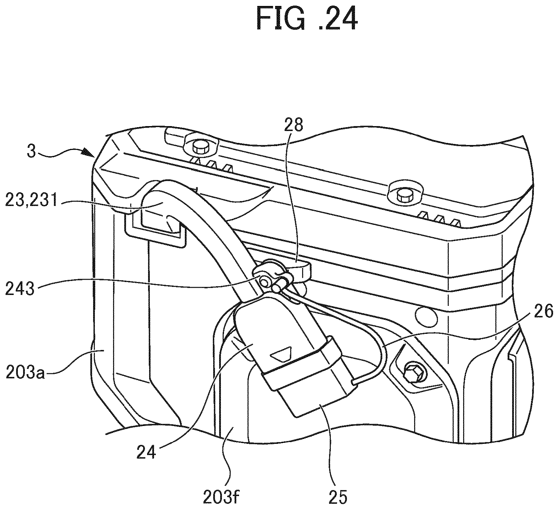

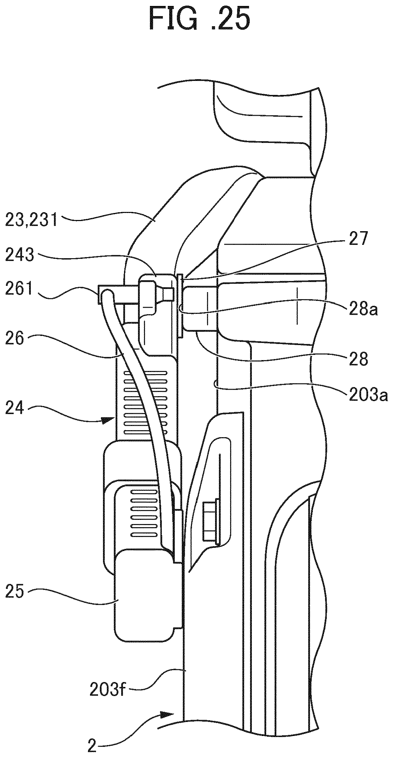

Using FIG. 24 and FIG. 25, a case of mounting the cap 25 to the connection terminal 24 will be further explained. FIG. 24 is a perspective view showing main parts of the electric power unit showing a state removing the connection terminal from the battery. FIG. 25 is a right-side view showing the main parts of the electric power unit showing a state removing the connection terminal from the battery. The connection terminal 24 of the present embodiment is made detachable relative to the mounting part 28 of the power unit main body 2, in a state removed from the battery 4.

In other words, as shown in FIG. 24 and FIG. 25, the cap 25 for protecting the terminal part 241 is mounted to the connection terminal 24 of the present embodiment, while removing from the battery 4. The connection terminal 24 is detachably mounted to the mounting part 28 of the power unit main body 2, in a state in which the cap 25 is mounted. In detail, as shown in FIG. 16, the pin 27 made of metal is mounted to the coupling base 243 of the connection terminal 24. The connection terminal 24 removed from the battery 4, as shown in FIG. 24, causes the pin 27 to abut the mounting part 28, by bending the harness 23 downwards using the flexibility of the second portion 231. The mounting part 28 retains the connection terminal 24 by attracting the pin 27 by way of the magnet 281 on the inside.

In this way, while removing the connection terminal 24 from the battery 4, since it is possible to mount the connection terminal 24 to the mounting part 28 of the power unit main body 2, during conveyance of the electric power unit 1 itself or the working machine 100 equipped with the electric power unit 1, it is possible to avoid the risk of the connection terminal 24 mistakenly hitting an external object, or the like and being damaged. For this reason, it is possible to improve the workability at the location of the connection terminal 24 in the disconnected state. In addition, the connection terminal 24 magnetically attracted to the mounting part 28 is able to be easily removed by separating from the mounting part 28 against the attractive force of the magnet 281.

It should be noted that the pin 27 of the connection terminal 24 magnetically attached to the mounting part 28 is provided to the coupling base 243 of the connection terminal 24, as shown in FIG. 16. Therefore, from the viewpoint of detachably mounting the connection terminal 24 to the mounting part 28, the coupling base 243 shows an embodiment of a detaching part of the connection terminal 24 relative to the mounting part 28.

With the coupling base 243, due to being provided to span between the connection terminal 24 and harness 23 as mentioned above, the connection site between the connection terminal 24 and harness 23 is reinforced, and can reduce the influence imparted on operability (ease of handling) of the connection terminal 24. In addition, with the coupling base 243 of the present embodiment, due to being provided continuously to one side face 240a serving as the grip part of the connection terminal 24, it is possible to curb to a minimum the influence imparted by the coupling base 243 on the operability (ease of handling) of the connection terminal 24, while maintaining the effect of reinforcing the connection site between the connection terminal 24 and harness 23. Furthermore, with the mounting part 28 of the present embodiment, due to attracting the connection terminal 24 by way of the magnet 281, it is possible to allow the connection terminal 24 to attach and detach from the battery 4 easily and quickly detached.

As shown in FIG. 25, in a state in which the connection terminal 24 protected by the cap 25 is mounted to the mounting part 28, a part of the cap 25 is abutting the outer face of the power unit main body 2. In detail, a surface of the cap 25 having the metal plate 253 is abutting the outer surface of the fan cover 203f mounted to the front motor cover 203a. At this time, the pin 27 of the connection terminal 24 and mounting part 28 are mounted in surface contact normally, without the surface of the pin 27 sloping relative to the leading end face 28a of the mounting part 28. In other words, the height at which the mounting part 28 projects towards the front of the power unit main body 2 is set to a height such that the surface of the cap 25 having the metal plate 253 can abut the outer surface of the fan cover 203f, in a state in which the pin 27 of the connection terminal 24 is mounted by surface contact normally to the leading end face 28a of the mounting part 28. With the connection terminal 24, due to being supported by at least two points of the mounting part 28 and a site other than the mounting part 28 (abutting site between cap 25 and fan cover 203f in the present embodiment), it is thereby possible to stably mount the connection terminal 24 in a disconnected state to the power unit main body 2, without applying unreasonable load on the connection terminal 24 or mounting part 28.

Sites other than the mounting part 28 may not be provided to the cap 25, or may be a part of the connection terminal 24 other than the pin 27. For example, one side face of the connection terminal main body 240 may be configured so as to abut the outer surface of the front motor cover 203a or fan cover 203f. However, by providing a site other than the mounting part 28 to the cap 25 as in the present embodiment, since it is possible to distance as much as possible the distance between the two points supporting the connection terminal 24, it is possible to further stabilize the mounted state of the connection terminal 24 to the mounting part 28.

It should be noted that, in the present embodiment, by establishing the projecting height of the mounting part 28 as the same projecting height as the fan cover 203f as shown in FIG. 25, the leading end face 28a of the mounting part 28 and the leading end face of the fan cover 203f (abutting site of cap 25) are configured to be arranged on the same plane. This is because the surface of the pin 27 of the connection terminal 24 and the surface of the cap 25 mounted to the connection terminal 24 having the metal plate 263 are arranged on the same plane. By appropriately adjusting the projecting height of the mounting part 28 (position of leading end face 28a) in this way, it is possible to stably support the connection terminal 24 mounted to the mounting part 28 at two points.

### (Second Embodiment)

### <Configuration of Working Machine>

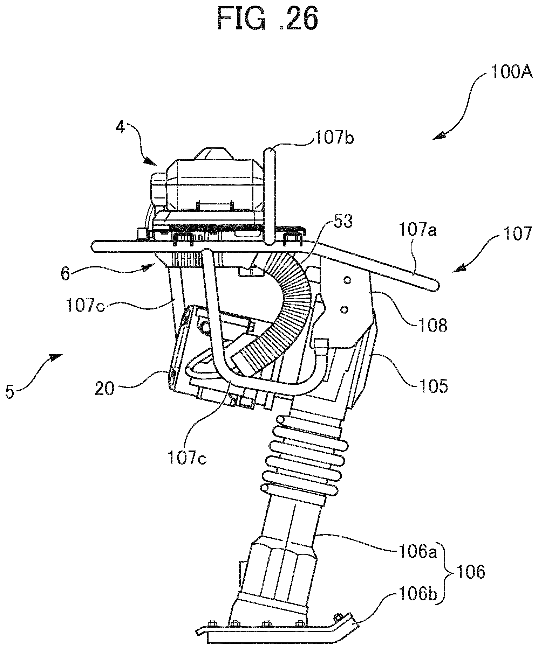

A second embodiment of a electric power unit will be explained in detail while referencing the drawings. FIG. 26 is a perspective view showing a configuration example of a working machine equipped with the electric power unit according to the second embodiment. The present embodiment exemplifies a rammer which is a form of a ground leveling device as the working machine 100A. The working machine 100A is a working machine equipped with the electric power unit 5. In detail, the working machine 100A includes the electric power unit 5, excitation mechanism unit 105, working mechanism unit 106, and handle 107.

The electric power unit 5, similarly to the electric power unit 1 shown in the first embodiment, has a power unit main body 6 having a motor 20, and the battery 4 which is a driving source which drives this power unit main body 6. The configuration of this electric power unit 5 will be explained in further detail at a later stage.

The excitation mechanism unit 105 has a crank (not illustrated) coupled to be able to transmit power with the motor 20. The excitation mechanism unit 105 converts the rotational power of the motor 20 into vertical motion by the crank, and transmits to the working mechanism unit 106. The working mechanism unit 106 is a part carrying out mainly ground compaction, and is an embodiment of a contact patch member. The working mechanism unit 106 has a leg 106a that can telescope vertically, and a rolling compaction plate 106b which is provided at the lower end of this leg 106a and contacts the ground. The leg 106a moves up and down by the excitation mechanism unit 105, and bounces up the working machine 100A itself by the recoil at this time. The working machine 100A causes compaction force to generate on the ground, by making the impact when dropping to act on the ground by the rolling compaction plate 106b. It should be noted that this power unit main body 6 and excitation mechanism unit 105 are an embodiment of a drive member for driving the contact patch member by electricity.

The handle 107 is configured in a bar shape which is mounted to the excitation mechanism unit 105 and can be gripped by the operator in a standing position. The handle 107 of the present embodiment is configured by a main handle 107a, upper handle 107b, and pair of side handles 107c, 107c. The main handle 107a is mounted to both side faces of the excitation mechanism section 105 by the brackets 108, 108, and is arranged so as to surround the circumference of the power unit main body 6 provided on the top of the working machine 100A in a substantially rectangular shape. The upper handle 107b stands up from parts arranged at the left/right of the power unit main body 6 of the main handle 107a, and extends so as to span left/right to link the main handle 107a. The upper handle 107b is arranged at immediately the back side of the battery 4. The side handles 107c, 107c respectively extend downwards from parts arranged at the left/right of the power unit main body 6 of the main handle 107a, and bend in an L shape at the side of the excitation mechanism unit 105 to be mounted to the excitation mechanism unit 105 by the brackets 108, 108.

<Configuration of Electric Power Unit>

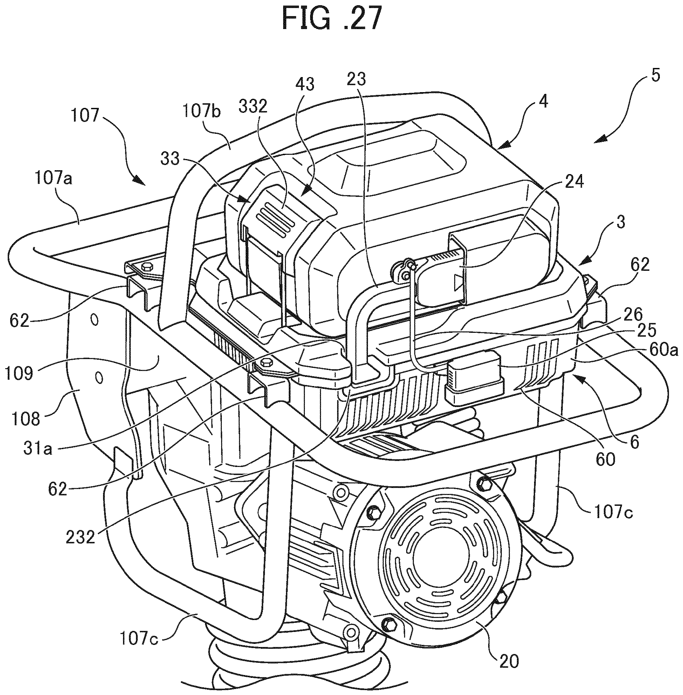

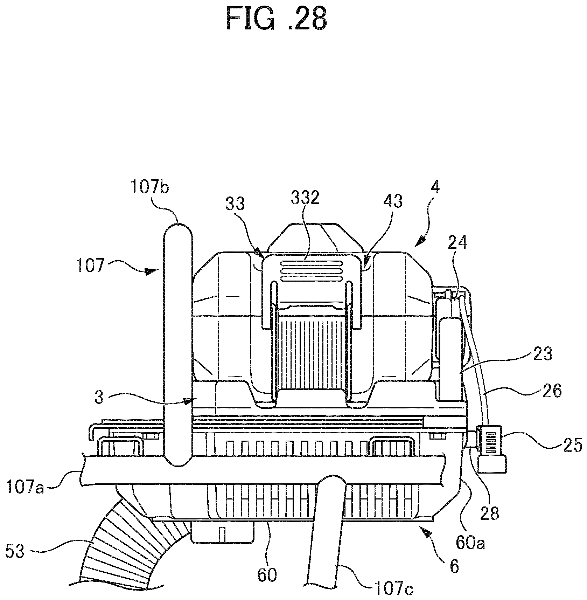

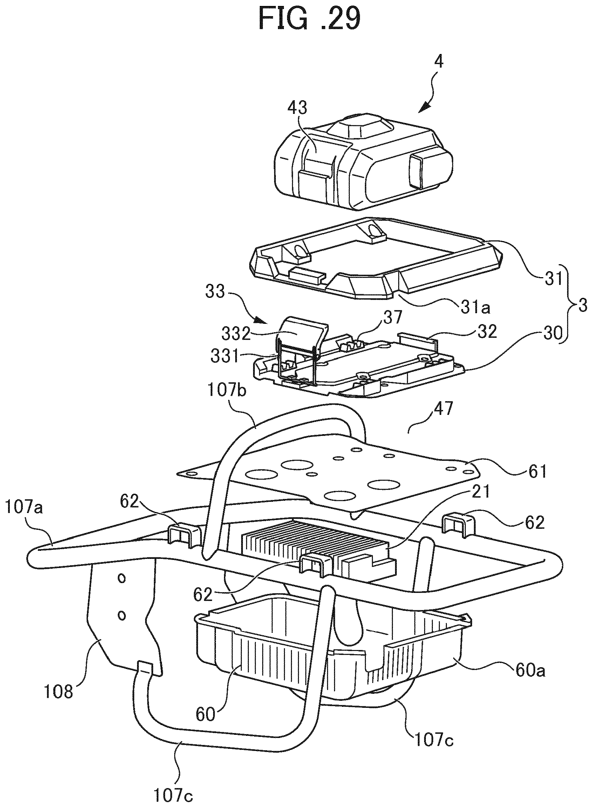

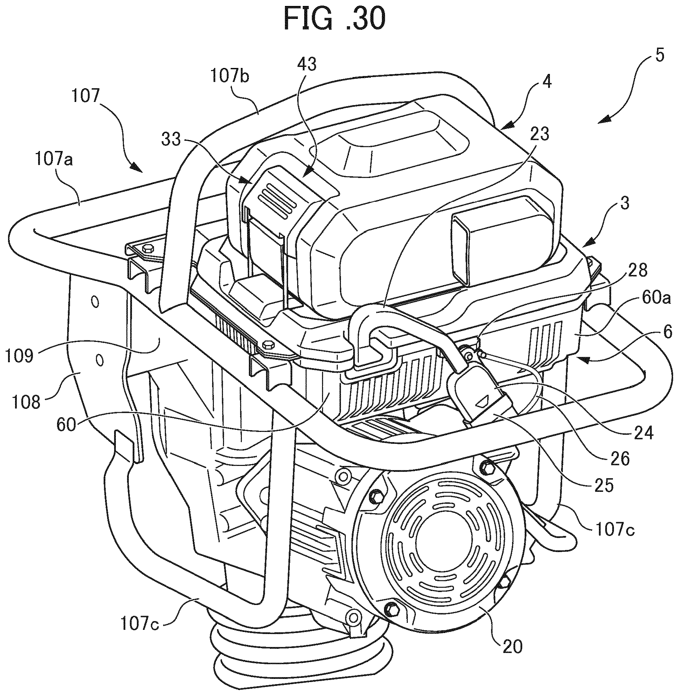

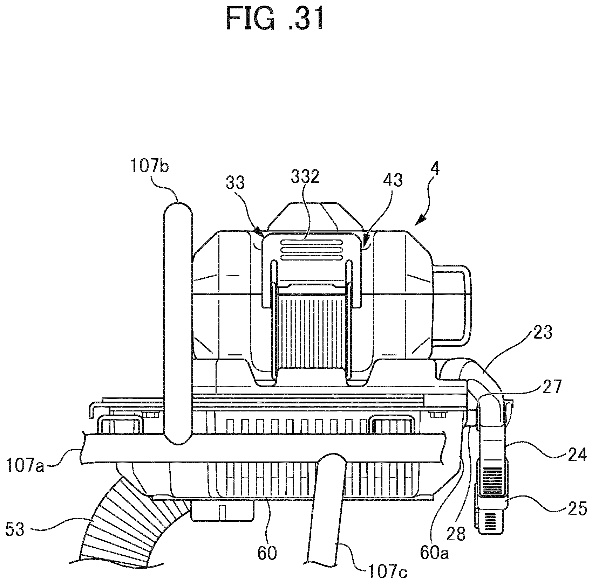

Next, the configuration of an electric power unit 5 according to the second embodiment will be explained. FIG. 27 is a perspective view of the electric power unit according to the second embodiment showing a state in which the connection terminal is connected to the battery. FIG. 28 is a left-side view of the electric power unit shown in FIG. 27. FIG. 29 is an exploded perspective view of main parts of the electric power unit according to the second embodiment. FIG. 30 is a perspective view of the electric power unit according to the second embodiment showing a state in which the connection terminal is removed from the battery. FIG. 31 is a left-side view of the electric power unit shown in FIG. 30. It should be noted that, in the electric power unit 5 according to the second embodiment, due to parts with the same reference symbol as the electric power unit 1 according to the first embodiment indicating parts of the same configuration, the explanation for the electric power unit 1 according to the first embodiment is invoked for the detailed explanations of these, and is omitted from the following explanation. In addition, in FIG. 29, fastening members such as screws and bolts for mounting each component are omitted from illustration.

The electric power unit 5 has a power unit main body 6, battery tray 3, battery 4 and motor 20. The arranged configuration of the motor 20 of the present embodiment, contrary to the arranged configuration of the motor 20 of the electric power unit 1 of the first embodiment, is arranged to be separated from the power unit main body 6. In other words, the motor 20 of the present embodiment couples the output shaft (rotary shaft) which is not illustrated to the crank (not illustrated) of the excitation mechanism unit 105, and is mounted to the front side of the excitation mechanism unit 105 of the working machine 100A. Furthermore, the power unit main body 6 has the PDU (Power Delivery Unit) 21, and PDU case 60.

The PDU case 60 is formed in a rectangular container shape having a top face opened, and stores the PDU 21 inside. The PDU case 60 storing the PDU 21 is covered by a top plate 61, and is mounted to be hanging inside of the main handle 107a via an appropriate number of support legs 62 mounted on the main handle 107a. The battery tray 3 is placed on the top plate 61.

The PDU 21 is electrically connected with the motor 20 by the main harness 53, as shown in FIG. 26. In addition, as shown in FIG. 27, the harness 23 having the connection terminal 24, which is the connecting part with the battery 4, is electrically connected to the PDU 21 inside the PDU case 60, and is drawn to outside from within the PDU case 60 through the harness drawing part 31a provided in the battery tray 3, and extends to the battery 4.

In the present embodiment, the mounting part 28 which is detachable with the connection terminal 24 and cap 25 is provided to the front face 60a of the PDU case 60 of the power unit main body 6. As shown in FIG. 27 and FIG. 28, it is thereby possible to mount the cap 25 to the mounting part 28 on the front face 60a of the PDU case 60, while the connection terminal 24 is connected with the battery 4. On the other hand, as shown in FIG. 30 and FIG. 31, while the connection terminal 24 is removed from the batter 4, it is possible to mount the connection terminal 24 to the mounting part 28 on the front face 60a of the PDU case 60 in a state mounting the cap 25 to the connection terminal 24. For this reason, according to the electric power unit 5 of the present embodiment and the working machine 100A equipped with the electric power unit 5, it is possible to obtain similar effects as the working machine 100 shown in the first embodiment.

It should be noted that, although the working machine 100A according to the second embodiment is supporting the connection terminal 24 mounting the cap 25 to the mounting part 28 at only the one point of the pin 27 of the connection terminal 24, similarly to the working machine 100 according to the first embodiment, it may be configured so as to provide support-dedicated components for supporting the connection terminal itself of the cap 25 mounted to the connection terminal 24, to the front face 60a or the like of the PDU case 60, so as to make the connection terminal 24 supportable at sites other than the mounting part 28.

### (Other Embodiments)

The respective embodiments explained above are configured so as to provide the mounting part 28 having the magnet 281 to the side of the power unit main body 2, 6, and provide the pin 27, metal plate 253 attaching with the magnet 281 to the connection terminal 24 and side of the cap 25; however, it is not limited thereto. It may be configured so as to provide the magnet to the side of the cap 25 and connection terminal 24, and provide the metal component attaching with this magnet to the side of the power unit main body 2, 6.

In addition, the configuration for providing the connection terminal 24, cap 25 to be detachable relative to the mounting part is not limited to a means by way of magnetic attraction between a magnet and metal component. For example, it may be locking or the like using convexo-concave engagement or hooks. However, as explained above, by configuring the connection terminal 24, cap 25 to be detachable by the magnetic attraction using the magnet 281, since it is possible to perform the attachment/detachment operation easily from any direction relative to the mounting part, the workability also improves.

Furthermore, the working machine is not limited to the ground leveling device explained above. However, as shown in the above respective embodiments, a case of the working machine 100, 100A being a ground leveling device has a particularly remarkable effect. In other words, it is possible to suppress the battery mounting direction from interfering with the frame provided for protecting the working machine from pebbles, etc. kicked up by one's own and others ground-leveling work, or the handle provided for the operator restrain the jumping up of the ground-leveling device from various direction, and thus the degrees of freedom in layout of the working machine 100, 100A can be improved.

It should be noted that the working machine is not limited to one configured by equipping only the electric power unit 1, 5 shown in the present embodiment, and although not illustrated, may be a hybrid-type working machine jointly using the electric power unit 1, 5 and a general purpose engine.

### EXPLANATION OF REFERENCE NUMERALS

2, 6 power unit main body (drive member)
20 motor (electrical component)
21 PDU (electrical component)
23 harness (connection member)
24 connection terminal (connection member)
3 battery tray (placement member)
32 retaining part
33 buckle (engaging member)
331 movable part
332 lever part (pressing part)
35 resistance member
37 elastic member
4 battery (electric-power storage member)
4b top face (of battery)
43 engaged part
100, 100A working machine
101, 106 working mechanism section (contact patch member)
102 power transmission mechanism section (drive member)
103, 105 excitation mechanism section (drive member)

## Claims

1. An electric power unit (1, 5), comprising:
a battery mounting structure, which comprises:
a placement member (3) provided at an upper part of an electrical component (20,21), wherein the placement member (3) is a battery tray (3);
a battery (4) which is provided to be attachable and detachable relative to the placement member (3) and drives the electrical component (20,21); and
a connection member (23,24) which extends from the electrical component (20,21) to the battery (4) and is capable of electrically connecting the electrical component (20,21) and the battery (4),
wherein the battery (4) has an engaged part (43), and
wherein the placement member (3) has an engaging member (33) which engages with the engaged part (43) to fix the battery (4) on the placement member (3); and
a power unit main body (2) that has the electrical component (20, 21), wherein the electrical component (20, 21) is a motor (20) and a power delivery unit (21) for power distribution, which controls the electric power from the battery (4) to the motor (20) in the power unit main body (2), wherein the power delivery unit (21) has a plurality of connection parts;
**characterized in that**
a harness (23), which has a connection terminal (24) for electrically connecting with the battery (4) and which introduces the electric power from the battery (4) to the power delivery unit (21), is connected to one of the connection parts (21a),
wherein the harness (23) and the connection terminal (24) form the connection member (23, 24);
wherein the harness (23), which electrically connects the power unit main body (2) and the battery (4), has a first portion (230), which is stored inside of the power unit main body (2) and which is electrically connected with the connection part (21a) of the PDU (21), and a second portion (231), which is drawn from the power unit main body (2) to outside and extends to the battery (4),
wherein the harness (23) is configured to be easily bendable in any direction,
wherein the connection terminal (24) is connected to a leading end of the second portion (231) of the harness (23),
wherein the connection terminal (24) has a connection terminal main body (240) made of resin, and a terminal part (241), which projects from a leading end of the connection terminal main body (240), wherein the terminal part (241) is configured to provide an electrical connection to a connector part in the battery (4) through an opening part (41a) of the battery (4);
that the engaging member (33) has a pressing part (332) which can apply a load towards the placement member (3) on the battery (4), in an engaged state with the battery (4), and
that an elastic member (37) is disposed between the placement member (3) and the battery (4).

2. The electric power unit (1, 5) according to claim 1, wherein the engaging member (33) has a movable part (331) which is mounted to the placement member (3), and the pressing part (332) is provided continuously to the movable part (331), and
wherein the engaged part (43) is disposed on a top face (4b) of the battery (4).

3. The electric power unit (1, 5) according to claim 2, wherein the movable part (331) is swingably mounted to the placement member (3), and
wherein the placement member (3) has a resistance member (35) which causes resistance during swinging of the movable part (331).

4. The electric power unit (1, 5) according to any one of claims 1 to 3, wherein the placement member (3) has a retaining part (32) which retains the battery (4), and
wherein the retaining part (32) is provided to be capable of attaching and detaching to the placement member (3).

5. A working machine (100,100A) comprising:
a drive member (2,6,102,103,105) which is driven by electricity, wherein the drive member (2,6,102,103,105) includes an electric power unit (1, 5) according to any one of the preceding claims 1 to 4.

## Patentansprüche

1. Elektrische Antriebseinheit (1, 5), die aufweist:
eine Batterieanbringungsstruktur, die aufweist:
ein Anordnungselement (3), das an einem oberen Teil einer elektrischen Komponente (20, 21) vorgesehen ist, wobei das Anordnungselement (3) ein Batterieeinsatz (3) ist;
eine Batterie (4), die vorgesehen ist, um bezüglich des Anordnungselements (3) anbringbar und entfernbar zu sein, und die die elektrische Komponente (20, 21) antreibt; und
ein Verbindungselement (23, 24), das von der elektrischen Komponente (20, 21) zu der Batterie (4) verläuft und dazu ausgelegt ist, die elektrische Komponente (20, 21) und die Batterie (4) elektrisch zu verbinden,
wobei die Batterie (4) ein Eingriffsteil (43) hat, und
wobei das Anordnungselement (3) ein eingreifendes Element (33) hat, das in das Eingriffsteil (43) eingreift, um die Batterie (4) am Anordnungselement (3) zu fixieren; und
einen Antriebseinheit-Hauptkörper (2), der die elektrische Komponente (20, 21) hat, wobei die elektrische Komponente (20, 21) ein Motor (20) und eine Leistungsversorgungseinheit (21) zur Leistungsverteilung ist, der den Strom von der Batterie (4) zu dem Motor (20) in dem Antriebseinheit-Hauptkörper (2) steuert, wobei die Leistungsverwaltungseinheit (21) eine Vielzahl von Verbindungsteilen hat;
**dadurch gekennzeichnet, dass**
ein Kabelbaum (23), der einen Verbindungsanschluss (24) zum elektrischen Verbinden mit der Batterie (4) hat und der den Strom von der Batterie (4) in die Leistungsversorgungseinheit (21) einleitet, mit einem der Verbindungsteile (21a) verbunden ist,
wobei der Kabelbaum (23) und der Verbindungsanschluss (24) das Verbindungselement (23, 24) bilden;
wobei der Kabelbaum (23), der den Antriebseinheit-Hauptkörper (2) und die Batterie (4) elektrisch verbindet, einen ersten Bereich (230) hat, der in dem Antriebseinheit-Hauptkörper (2) aufgenommen ist und der elektrisch mit dem Verbindungsteil (21a) der PDU (21) verbunden ist, und einen zweiten Bereich (231), der vom Antriebseinheit-Hauptkörper (2) nach außen gezogen wird und zur Batterie verläuft,
wobei der Kabelbaum (23) ausgestaltet ist, um einfach in beliebige Richtungen biegbar zu sein,
wobei der Verbindungsanschluss (24) mit einem führenden Ende des zweiten Bereichs (231) des Kabelbaums (23) verbunden ist,
wobei der Verbindungsanschluss (24) einen Verbindungsanschluss-Hauptkörper (240) hat, der aus einem Kunstharz hergestellt ist, und ein Anschlussteil (241), das von einem führenden Ende des Verbindungsanschluss-Hauptkörpers (42) hervorsteht, wobei das Anschlussteil (241) ausgestaltet ist, eine elektrische Verbindung mit einem Verbindungsteil in der Batterie (4) über ein Öffnungsteil (41a) der Batterie (4) vorzusehen;
dass das eingreifende Element (33) ein Pressteil (332) hat, dass eine Belastung in Richtung des Anordnungselements (3) an der Batterie (4) in einem in der Batterie (4) eingegriffenen Zustand ausüben kann, und
dass ein elastisches Element (37) zwischen dem Anordnungselement (3) und der Batterie (4) angeordnet ist.

2. Elektrische Antriebseinheit (1, 5) nach Anspruch 1, wobei das eingreifende Element (33) ein bewegliches Teil (331) hat, das am Anordnungselement (3) angebracht ist, und das Pressteil (132) fortlaufend zum beweglichen Teil (331) vorgesehen ist, und
wobei das eingegriffene Teil (43) an einer Oberseite (4b) der Batterie (4) angeordnet ist.

3. Elektrische Antriebseinheit (1, 5) nach Anspruch 2, wobei das bewegliche Teil (331) schwingbar am Anordnungselement (3) angebracht ist, und
wobei das Anordnungselement (3) ein Widerstandselement (35) hat, das einen Widerstand während des Schwingens des beweglichen Teiles (331) verursacht.

4. Elektrische Antriebseinheit (1, 5) nach einem der Ansprüche 1 bis 3, wobei das Anordnungselement (3) ein Rückhalteteil (32) hat, das die Batterie (4) zurückhält, und
wobei das Rückhalteteil (32) vorgesehen ist, um dazu ausgelegt zu sein, das Anordnungselement (3) anzubringen und zu entfernen.

5. Arbeitsgerät (100, 100A), das aufweist:
ein Antriebselement (2, 6, 102, 103, 105), das durch elektrischen Strom angetrieben wird, wobei das Antriebselement (2, 6, 102, 103, 105) eine elektrische Antriebseinheit (1, 5) nach einem der vorhergehenden Ansprüche 1 bis 4 aufweist.

## Revendications

1. Unité électrique (1, 5), comprenant :
une structure de montage de batterie, qui comprend :
un élément de placement (3) prévu au niveau d'une partie supérieure d'un composant électrique (20, 21), dans laquelle l'élément de placement (3) est un support de batterie (3) ;
une batterie (4) qui est prévue pour être pouvoir être attachée à l'élément de placement (3), et détachée de celui-ci, et entraîne le composant électrique (20, 21) ; et
un élément de connexion (23, 24) qui s'étend du composant électrique (20, 21) à la batterie (4) et est capable de connecter électriquement le composant électrique (20, 21) et la batterie (4),
dans laquelle la batterie (4) a une partie en prise (43), et
dans laquelle l'élément de placement (3) a un élément de mise en prise (33) qui vient en prise avec la partie en prise (43) pour fixer la batterie (4) sur l'élément de placement (3) ; et
un corps principal d'unité d'énergie (2) qui a le composant électrique (20, 21), dans laquelle le composant électrique (20, 21) est un moteur (20) et une unité de distribution d'énergie (21) pour la distribution d'énergie, qui commande l'énergie électrique de la batterie (4) au moteur (20) dans le corps principal d'unité d'énergie (2), dans laquelle l'unité de distribution d'énergie (21) a une pluralité de parties de connexion ;
**caractérisée en ce que**
un faisceau (23), qui a une borne de connexion (24) pour se connecter électriquement à la batterie (4) et qui introduit l'énergie électrique de la batterie (4) à l'unité de distribution d'énergie (21), est connecté à l'une des parties de connexion (21a),
dans laquelle le faisceau (23) et la borne de connexion (24) forment l'élément de connexion (23, 24) ;
dans laquelle le faisceau (23), qui connecte électriquement le corps principal d'unité d'énergie (2) et la batterie (4), a une première portion (230), qui est stockée à l'intérieur du corps principal d'unité d'énergie (2) et qui est électriquement connectée à la partie de connexion (21a) de la PDU (21), et une deuxième portion (231), qui est étirée depuis le corps principal d'unité d'énergie (2) vers l'extérieur et s'étend jusqu'à la batterie (4),
dans laquelle le faisceau (23) est configuré pour être facilement pliable dans n'importe quelle direction,
dans laquelle la borne de connexion (24) est connectée à une extrémité avant de la deuxième portion (231) du faisceau (23),
dans laquelle la borne de connexion (24) a un corps principal de borne de connexion (240) constitué de résine, et une partie de borne (241), qui fait saillie depuis une extrémité avant du corps principal de borne de connexion (240), dans laquelle la partie de borne (241) est configurée pour fournir une connexion électrique à une partie connecteur dans la batterie (4) à travers une partie d'ouverture (41a) de la batterie (4) ;
**en ce que** l'élément de mise en prise (33) a une partie de pression (332) qui peut appliquer une charge en direction de l'élément de placement (3) sur la batterie (4), dans un état en prise avec la batterie (4), et
**en ce qu'**un élément élastique (37) est disposé entre l'élément de placement (3) et la batterie (4).

2. Unité électrique (1, 5) selon la revendication 1, dans laquelle l'élément de mise en prise (33) a une partie mobile (331) qui est montée sur l'élément de placement (3), et la partie de pression (332) est agencée en continu sur la partie mobile (331), et
dans laquelle la partie en prise (43) est disposée sur une face supérieure (4b) de la batterie (4).

3. Unité électrique (1, 5) selon la revendication 2, dans laquelle la partie mobile (331) est montée de manière pivotante sur l'élément de placement (3), et
dans laquelle l'élément de placement (3) a un élément de résistance (35) qui provoque une résistance lors du pivotement de la partie mobile (331).

4. Unité électrique (1, 5) selon l'une quelconque des revendications 1 à 3, dans laquelle l'élément de placement (3) a une partie de retenue (32) qui retient la batterie (4), et
dans laquelle la partie de retenue (32) est prévue pour pouvoir s'attacher à l'élément de placement (3), et à se détacher de celui-ci.

5. Machine de travail (100, 100A) comprenant :
un élément d'entraînement (2, 6, 102, 103, 105) qui est entraîné par l'électricité, dans laquelle l'élément d'entraînement (2, 6, 102, 103, 105) comprend une unité électrique (1, 5) selon l'une quelconque des revendications précédentes 1 à 4.
